# FASCICULE DE BREVET EUROPEEN

(11) **EP 2 258 823 B1**
(45) Date de publication et mention de la délivrance du brevet: **24.04.2013**
(21) Numéro de dépôt: 10290293.9
(22) Date de dépôt: 03.06.2010
(51) Int. Cl.: C12C 1/02, C12C 1/027, C12C 1/10, B65D 88/74, F26B 25/10

(54) **Dispositif de plateau de malterie, touraille, germoir et outil de trempage**
Plateauvorrichtung zum Mälzen, Darren und Keimen, sowie Weichcorrichtung
Malt house kiln floor device, kiln, malt floor and steeping means

(30) Priorité: 04.06.2009 FR 0902700
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- EP-A2- 0 104 367
- BE-A- 440 151
- DE-A1- 3 147 671
- US-A- 4 137 682
- US-A- 4 498 269
- US-A- 4 619 085
- US-A- 4 943 534
- US-A1- 2004 187 416

## Description

L'invention concerne le domaine technique de la malterie.

Il s'agit de reproduire le développement naturel de germination d'une céréale, afin que celle-ci développe certains enzymes (notamment l'amylase, la protéase). Comme céréale on utilise généralement de l'orge, ou encore du seigle, du blé, du sorgho ou de l'épeautre. Le maltage comprend le traitement de la céréale par une succession d'opérations (notamment : trempage - germination - touraillage - dégermage), après quoi on obtient du malt. Il existe de gros besoins en malt de différentes propriétés et qualités, notamment pour la brasserie.

Les principes généraux du maltage sont quasi ancestraux. On en trouve une synthèse dans l'ouvrage "Malterie et brasserie", de Jean SUNIER, 2ème édition, imprimerie La Concorde, Lausanne, 1968, ou encore dans sa réédition plus récente sous le nouveau titre "La Fabrication de la bière", Alliage éditeur, 26 septembre 2007, ISBN-13 No 978-2921327602.

BE 4 40151 décrit des grilles susceptibles d'être utilisées dans des tourailles de malterie.

Aujourd'hui, le maltage est industriel, et réalisé de plus en plus dans des installations appelées malteries. L'un des buts d'une malterie est de mettre en place une installation automatisée qui procure un excellent rendement en termes qualitatifs, tout en cherchant à réduire les nombreux coûts d'investissement et de fonctionnement de cette industrie: emprise de terrain, génie civil de construction, besoins en énergie, notamment.

De façon générale, une telle installation peut comporter au moins un outil de trempage, au moins un germoir et au moins une touraille, avec un système de transport de l'un à l'autre, dans l'ordre. Une touraille peut comprendre une cuve à grains germés comportant un plateau ou grille formant un fond muni d'ouvertures d'aération. La touraille peut comprendre une chambre de ventilation disposée sous la cuve. Un système de ventilation alimente la chambre de ventilation en air de pression, température et humidité contrôlées. L'air traverse la grille et les grains germés reposant sur le plateau. Le plateau est une source de pertes de charge aérauliques significatives. Il en va de même dans un germoir ou un outil de trempage.

L'invention vient améliorer la situation.

Un dispositif de plateau de touraillage de grains germés pour fond de cuve à grains germés, comprend des barres supérieures parallèles présentant au moins une surface supérieure sensiblement horizontale, et deux surfaces latérales symétriques et inclinées par rapport à un plan longitudinal, lesdites surfaces latérales se rapprochant mutuellement en allant à l'opposé de la surface supérieure, des barres inférieures sensiblement perpendiculaires aux barres supérieures présentant une surface inférieure sensiblement horizontale, et deux surfaces latérales supérieures symétriques et inclinées par rapport à un plan vertical, lesdites surfaces latérales supérieures se rapprochant mutuellement en allant à l'opposé de la surface inférieure, et des poutres de support des barres inférieures, les barres inférieures étant fixées aux barres supérieures et aux poutres de support, l'écartement minimal entre deux barres inférieures étant supérieur à l'écartement minimal entre deux barres supérieures. Le plateau forme une grille à taux d'ouverture élevé et un faible risque de coincement de grains. Le balayage du plateau est aisé. L'énergie consommée par le système de ventilation est réduite.

D'autres caractéristiques et avantages de l'invention apparaîtront à l'examen de la description détaillée ci-après, et des dessins annexés, sur lesquels :
- la figure 1 est, en vue de dessus, un schéma d'implantation pour un mode de réalisation particulier d'une installation de maltage,
- la figure 2 est, en vue perspective, un schéma de principe de l'implantation des convoyeurs,
- la figure 3 est, en vue de dessus, un schéma d'implantation pour un mode de réalisation particulier d'une touraille, charpente et toiture omises,
- la figure 4 est, en coupe selon IV-IV de la figure 3, un schéma d'implantation pour un mode de réalisation particulier d'une touraille,
- la figure 5 est, en coupe selon V-V de la figure 4, un schéma d'implantation pour un mode de réalisation particulier d'une touraille,
- la figure 6 est, en coupe, un schéma d'implantation pour un mode de réalisation particulier de goulottes,
- la figure 7 est, en coupe, un schéma d'implantation pour un mode de réalisation particulier de transporteur de sortie de touraille,
- les figures 8 à 11 sont des vues en coupe selon un plan vertical de modes de réalisation d'une grille de touraillage ; et
- la figure 12 est une vue en coupe selon un plan vertical perpendiculaire au précédent d'un mode de réalisation d'une grille de touraillage.

Les dessins annexés pourront non seulement servir à compléter l'invention, mais aussi contribuer à sa définition, le cas échéant.

Il est fait référence aux ouvrages "Malterie et brasserie" et/ou "La Fabrication de la bière", déjà cités, pour acquérir au besoin une connaissance générale des installations de malterie. Le maltage réalisé en malterie fait appel à des techniques complexes, et les éléments connus de l'homme du métier ne seront pas décrits en détail ici, en dehors de ce qui est directement nécessaire.

La suite de la présente description est faite en référence à l'orge en tant que céréale.

Abstraction faite des tâches d'intendance comme le stockage des grains d'orge, le processus de maltage comprend au moins les étapes suivantes:
a) Un trempage des grains d'orge. Celui-ci peut se faire dans différentes sortes de cuves de trempage, que l'on appellera génériquement "outil de trempage".
b) La germination, qui s'effectue dans des germoirs susceptibles de plusieurs modes de réalisation, notamment en raison de leur forme, qui peut être circulaire, ou au contraire semblable à un rectangle allongé. Après cette étape l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en le retournant et/ou l'égalisant avec un bras radial. Après cette étape l'orge est qualifiée de malt.
d) Le dégermage, qui consiste à éliminer les radicelles de l'orge.

On donnera maintenant quelques indications générales typiques sur ces différentes étapes. Les grains de céréale sont tout d'abord soigneusement nettoyés. Le but principal du trempage est de porter le grain à une teneur en eau proche de 50 %, typiquement entre 40 et 45 %. Il est bon aussi de lui apporter de l'oxygène, de sorte que la germination soit tout juste initiée ou sur le point de l'être en sortie de trempage.

On utilise la trempe alternée ou discontinue, avec des alternances de période pendant lesquelles le grain est sous l'eau, et d'autres (de durée environ moitié) où le grain est à découvert.

La température de l'eau est typiquement de 12 à 15°C, voir 20°C avec alternance d'eau froide. Le maximum est autour de 35°C, où le grain risque de mourir. Différents additifs peuvent être prévus pour empêcher la fermentation et le développement de micro-organismes pendant le trempage.

La germination se fait en plaçant un lit de grains trempés sur une grille fine, traversée par un flux d'air sous température, pression et humidité contrôlées, avec brassage des grains à l'aide de vis sans fin verticales plongeant dans le lit, et entraînées par des moteurs, l'ensemble étant par exemple monté sur un chariot mobile qui parcourt le germoir. Ce chariot serait un bras pour un germoir circulaire. Pour un germoir rectangulaire, il s'agit d'un chariot mobile sur la longueur. Le mouvement des vis sans fin et la vitesse de déplacement du chariot sont sous contrôle.

On en vient maintenant au touraillage. Là aussi, cette opération s'effectue sur une grille, sur laquelle les grains sont posés. Il s'agit de les faire sécher pour stopper la germination, tout en gardant le mieux possible les propriétés désirées du malt. Comme son nom l'indique, le touraillage s'effectue en principe sur une plate-forme circulaire mise d'une grille traversée par de l'air chaud, également sous température, pression et humidité contrôlées. Un bras de niveau réglable verticalement peut être muni de vis sans fin plongeant dans le lit de grains, afin de tendre à l'homogénéiser verticalement ou d'une vis d'axe horizontal pour l'égalisation, le chargement et le déchargement, ou encore de pales fixes ou réglables. La vitesse de rotation de la ou des vis sans fin et le sens et la vitesse angulaire d'avancée du bras sont également contrôlées. Le temps de séjour des grains est également contrôlé.

En outre, un mécanisme de nettoyage de la chambre de ventilation peut être pourvu de goulottes sensiblement parallèles formant le fond de la chambre de ventilation, et de vis transporteuses montées dans les goulottes, les vis étant entraînées par le convoyeur dans un sens amenant des débris tombés dans une goulotte vers le convoyeur. Le convoyeur peut être monté traversant dans la chambre de ventilation pour évacuer lesdits débris lors d'un nettoyage de la chambre de ventilation. Le nettoyage comprend l'actionnement des vis transporteuses par le convoyeur dans un sens amenant des débris tombés dans une goulotte vers le convoyeur. Le convoyeur peut être actionné dans un sens pour le nettoyage et dans un autre sens pour la vidange des grains. Ceci réduit considérablement la durée et la pénibilité du nettoyage, notamment de la chambre de ventilation.

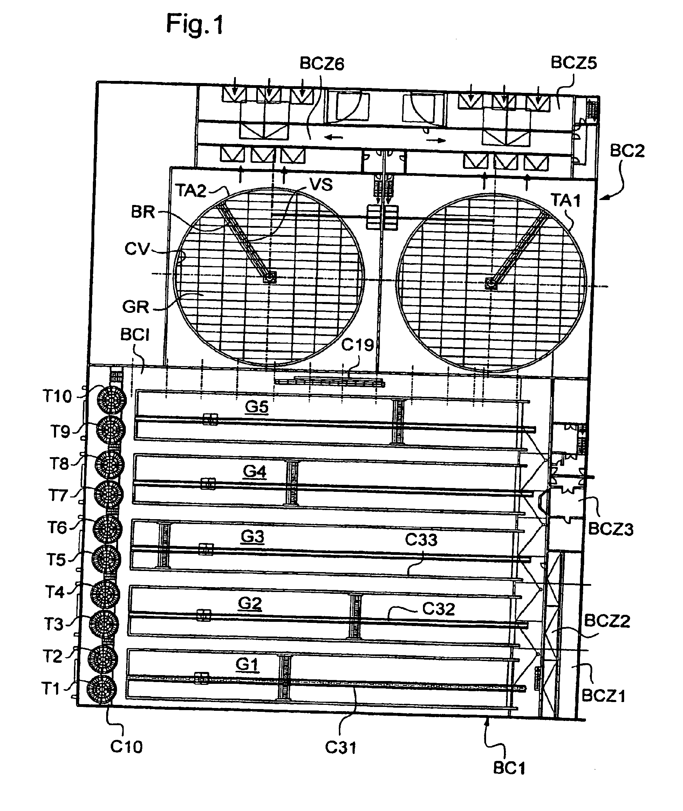

La figure 1 illustre un mode de réalisation des installations. Elle fait apparaître à droite un premier corps de bâtiment BC1, et à gauche un second corps de bâtiment BC2. Dans le corps de bâtiment BC1 sont implantés plusieurs, ici cinq, germoirs G1 à G5. Dans le même corps de bâtiment, en bout des germoirs, ici au-dessous, sont implantés plusieurs, ici dix, cuves de trempage TR1 à TR10. Ici, les cuves de trempage sont disposées par paire au bout de chacun des germoirs, d'où une réduction de la surface couverte, du nombre de bâtiments et la possibilité d'utiliser un même convoyeur pour déplacer le grain d'un outil de trempage vers un germoir et pour déplacer le malt vert d'un germoir vers une touraille, à des moments différents.

Dans le second corps de bâtiment BC2 sont prévus deux tourailles TA1 et TA2. On peut réutiliser de l'air de sortie d'une touraille dans la touraille voisine, d'où une réduction de la consommation d'énergie en chauffage et en ventilation. En outre, l'air de sortie de la deuxième touraille présente à certains moments de fonctionnement un taux de saturation en vapeur d'eau plus élevé d'où une capacité calorique accrue et une meilleure récupération d'énergie dans des échangeurs de chaleur.

Des zones de service sont prévues adjacentes à la partie supérieure du corps de bâtiment BC1, en BCZ1, BCZ2 et BCZ3.

D'autres zones de service sont prévues en BCZ5 et BCZ6. Elles servent essentiellement à récupérer le fluide gazeux utilisé au touraillage, qui traverse dans cet exemple la touraille de bas en haut, et se voit donc récupéré vers la gauche de la figure 1.

Des installations de sous-sols, non représentées, permettent d'élaborer l'atmosphère gazeuse requise, d'une part, pour la germination, d'autre part, pour le touraillage, ainsi que l'air requis pour les cuves de trempage lors de phases de respiration du grain.

Sur la figure 1, on distingue un convoyeur double effet C10 passant sous les cuves TR1 à TR10, ainsi que la trace d'un convoyeur C19 sur lequel on reviendra.

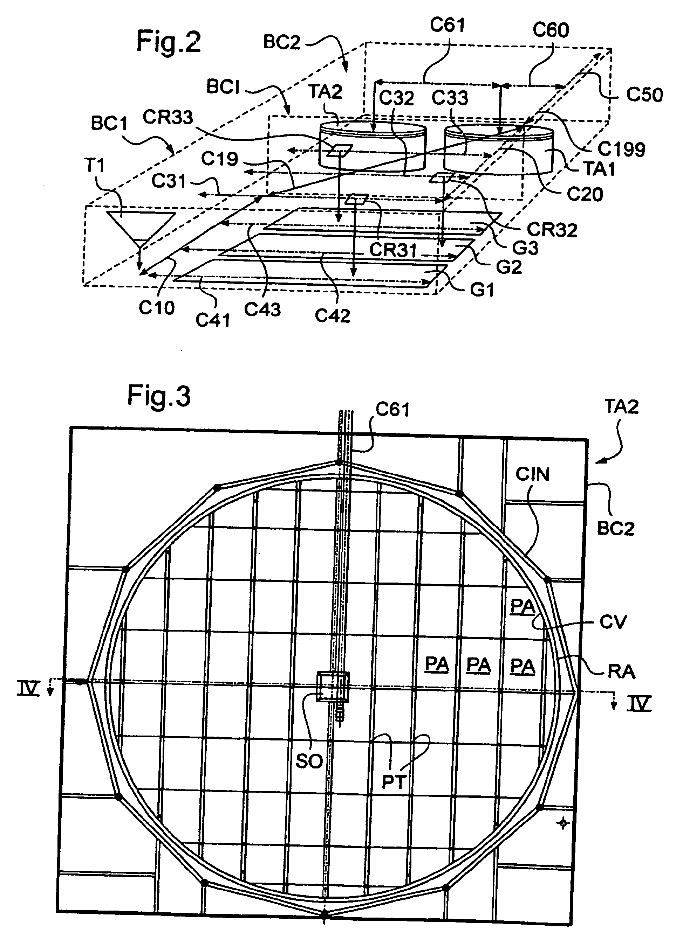

Il est maintenant fait référence à la figure 2, qui un schéma en perspective illustrant le cheminement des différents convoyeurs dans l'installation.

La disposition du bâtiment est définie sur la figure 2 par un trait pointillé fin et serré. On distingue à l'avant le corps de bâtiment BC1 et à l'arrière le corps de bâtiment BC2. Entre ceux-ci apparaît une cloison verticale BC1, qui délimite les deux corps de bâtiment BC 1 et BC2.

Pour simplifier, une seule cuve de trempage TR1 est représentée, et de même seuls trois germoirs G1 à G3 sont représentés, au lieu des cinq de la figure 1.

Le convoyeur C10 passe sous les cuves de trempage telles que TR1, pour rejoindre la partie basse du convoyeur C 19, qui est un convoyeur ascensionnel situé près de la cloison BCI. A son extrémité supérieure C 199, le convoyeur C19 peut desservir soit le convoyeur C20, soir le convoyeur C50, tous deux étant horizontaux en partie haute des corps de bâtiment BC 1 et BC2, respectivement.

Du convoyeur C20, il part trois convoyeurs C31, C32 et C33, perpendiculaires au convoyeur C20. Les convoyeurs C31, C32 et C33 sont respectivement situés au-dessus des germoirs G1 à G3, sensiblement dans leur de symétrie longitudinale. La flèche C319 située à l'extrémité gauche du convoyeur C31 indique le grain trempé peut se déverser dans germoir G1. En fait, ce déversement peut se faire de manière commandée en n'importe quelle position du convoyeur C31 au-dessus du germoir G1, de sorte que l'on puisse remplir celui-ci de grains de manière sensiblement régulière. Les convoyeurs perpendiculaires C31, C32 et C33 sont munis d'un chariot CR31, CR32 et CR33 de déversement. Chaque chariot CR31, CR32 et CR33 est disposé le long du convoyeur correspondant et peut se déplacer continument ou entre des positions de travail prédéfinies. Chaque chariot CR31, CR32 et CR33 comprend des rouleaux inversant la concavité de la bande du convoyeur vue en section transversale, faisant ainsi tomber le grain. En d'autres termes, la bande présente en section courante une concavité vers le haut en forme de □, et au niveau du chariot une concavité vers le bas en forme de 1.

Le vidage des germoirs s'effectue par le bas. Les grains germés sont repris par des convoyeurs horizontaux C41, C42 et C43, pour les germoirs G1 à G3 respectivement.

A leur extrémité gauche, ces convoyeurs C41 à C43 rejoignent le convoyeur C10 déjà cité. Les grains germés sont transportés par ce convoyeur C10 jusqu'au convoyeur ascensionnel C19, pour retrouver cette fois le convoyeur supérieur C50, lequel est suivi d'un convoyeur perpendiculaire horizontal C60, pour alimenter la touraille TA1, sensiblement en son centre. Le grain peut également être repris par le convoyeur C61 pour alimenter la touraille TA2, sensiblement en son centre, au lieu de la touraille TA1. Le schéma de principe qui précède comporte différentes jonctions et commutations de convoyeurs, sur lesquelles on reviendra par la suite. Dans le mode de réalisation représenté, les tourailles TA1 et TA2 comprennent une grille. Alternativement, les tourailles peuvent comprendre une pluralité de grilles superposées avec un mécanisme de descente des grains d'une grille vers une grille d'un niveau inférieur.

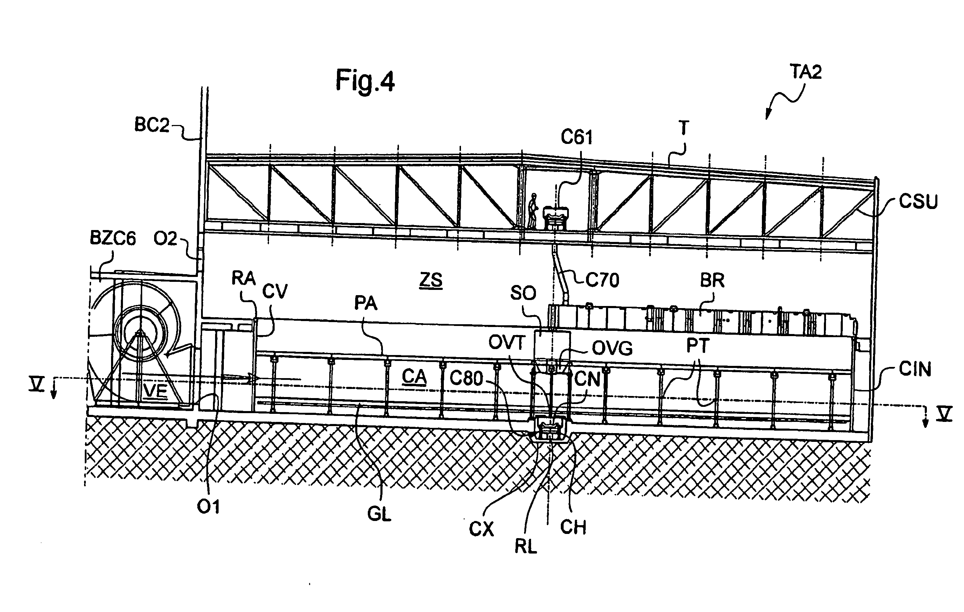

Dans le mode de réalisation des figures 3 à 5, la touraille TA2 disposée dans le bâtiment BC2 comprend une charpente intérieure CIN définissant un espace sensiblement cylindrique polygonal régulier d'axe vertical et une cuve CV disposée dans la charpente intérieure CIN. La cuve CV est disposée au dessus du fond FO du bâtiment BC2. Une grille GR ou plateau est disposée dans la cuve CV et en forme le fond. Une chambre de ventilation CA est délimitée verticalement entre le fond FO et le grille GR de la cuve CV et latéralement par la charpente intérieure CIN. La grille GR est sensiblement horizontale. La grille GR comprend une pluralité de panneaux PA de forme générale rectangulaire. Chaque panneau est muni d'ouvertures allongées configurées pour laisser passer l'air en retenant le grain. Les panneaux PA peuvent être formés à partir d'une tôle perforée ou à partir de barreaux, par exemple de barreaux soudés se croisant perpendiculairement. La touraille TA2 est alimentée par le convoyeur C60 et le convoyeur C61. Une extrémité du convoyeur C61 est disposée au dessus de la cuve CV.

Le grain apporté par le convoyeur C61 descend par une conduite C70 pour atteindre la grille GR à proximité du centre de la touraille TA2. Un bras rotatif BR est disposé dans la touraille TA2 au-dessus de la grille GR. Le bras BR est monté à rotation autour d'un axe vertical passant par le centre de la touraille TA2. La longueur du bras BR est très légèrement supérieure au rayon de la touraille TA2. Le bras BR est supporté au centre de la touraille TA2 par un socle SO reposant sur le sol par l'intermédiaire de poteaux PT. Les poteaux PT servent également à supporter la grille GR. L'extrémité opposée du bras BR repose sur un rail circulaire RA disposé autour de la grille GR.

Le bras BR est muni d'organes de répartition du grain permettant d'en disposer une épaisseur sensiblement régulière sur la grille GR, par exemple une vis sans fin VS d'axe sensiblement horizontal. Le bras BR supporte la vis radiale VS, voir figure 1. Plus précisément, le grain est déversé à proximité du socle SO par la conduite C70, puis étalé vers l'extérieur par les organes de répartition lors de la rotation du bras BR. Le bras BR est déplaçable en hauteur pour tenir compte de l'épaisseur de la couche de grains notamment.

Les organes de répartition du grain peuvent comprendre des lames fixes par rapport au bras ou des mélangeurs motorisés, par exemple sous la forme de lames ou de vis rotatives, permettant de remuer le grain reposant sur la grille GR et de le répartir en épaisseur sensiblement uniforme. Les éléments de répartition supportés par le bras BR peuvent également être orientables entre une position de répartition homogène du grain lors du remplissage de la touraille et une position d'évacuation pour ramener le grain vers la sortie après que l'étape de touraillage a été effectuée.

Au-dessus de la touraille TA2, est installée une charpente supérieure CSU supportant la toiture T et les convoyeurs C60 et C61 disposés sous la toiture T. Les convoyeurs C60 et C61 peuvent être disposés dans un passage planchéié offrant un accès aux opérateurs.

Le touraillage proprement dit est effectué par une circulation d'air chaud, à température, humidité, pression et débit contrôlés. A cet effet, au moins un ou deux ventilateurs VE, par exemple de type centrifuge, sont installés au voisinage du bâtiment BC2 dans la zone de service BCZ6. Le ventilateur VE reçoit de l'air chauffé et humidifié, éventuellement additionné de composés de traitement du grain, par exemple pour éviter le développement de substances indésirables dans le grain. Le ventilateur VE débouche sous la grille GR par une ouverture O1 ménagée dans le mur du bâtiment BC2. L'air circule du ventilateur VE vers la zone inférieure ou chambre de ventilation CA de la touraille TA2, traverse la grille GR, traverse la couche de grain reposant sur la grille GR passe dans une zone supérieure ZS de la touraille TA2 au dessus de la cuve CV, puis est évacué par une ouverture 02 ménagée dans une partie supérieure du mur du bâtiment BC2. En sortie, l'air peut être relâché dans l'atmosphère, éventuellement après récupération d'énergie, par exemple par un échangeur de chaleur, ou envoyé vers la touraille TA1. Le ventilateur VE est à débit commandé permettant ainsi une excellente adaptation à la nature du grain et à l'évolution du grain au cours du touraillage.

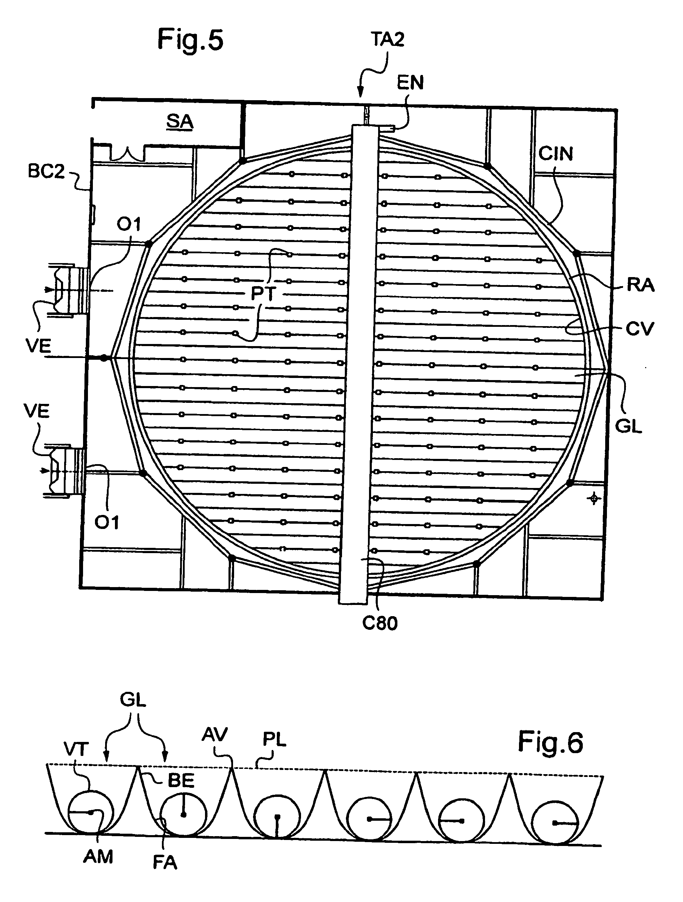

Un convoyeur C80 est disposé dans la chambre de ventilation CA de la touraille TA2 pour l'évacuation du grain après l'étape de touraillage. Le convoyeur C80 présente une longueur supérieure au diamètre de la touraille TA2, voir figure 5. En d'autres termes, les extrémités du convoyeur C80 disposées diamétralement dans la touraille TA2 sont disposées à l'extérieur de la touraille TA2 et de la charpente intérieure CIN. Le convoyeur C80 comprend une chaîne transporteuse CN sans fin, par exemple en acier inoxydable avec racleurs en matériau synthétique, un châssis CH par exemple à base d'acier inoxydable, des rouleaux RL pour la course de retour, et un entraînement EN.

L'entraînement EN peut comprendre un moteur électrique en prise directe avec un rouleau d'extrémité de la chaîne transporteuse ou par l'intermédiaire d'un réducteur. L'entraînement EN est disposé à une extrémité du convoyeur C80 en dehors de la touraille TA2. L'entraînement EN est ainsi aisément accessible aux opérateurs, y compris pendant l'opération de touraillage, d'où une surveillance et une maintenance aisées. Par ailleurs, l'entraînement EN extérieur à la touraille TA2 peut être optimisé en vue d'une fiabilité élevée et/ou d'une consommation d'énergie faible au lieu d'être optimisée en vue de satisfaire aux exigences des normes relatives aux atmosphères explosives obligatoires à l'intérieur de la touraille TA2. En outre, les rouleaux d'extrémité soumis à l'effort de tension de la bande transporteuse, subissent une usure et présentent un risque d'échauffement supérieur à ceux des rouleaux courants supportant la chaîne transporteuse. La disposition des rouleaux d'extrémités hors de la touraille TA2 permet également une surveillance et une maintenance aisées.

La touraille TA2 peut comprendre un convoyeur disposé sous la chambre de ventilation pour recueillir les grains germés lors du déchargement de la cuve par ledit orifice de déchargement.

La cuve CV peut être munie d'un orifice de déchargement OVG. La vidange des grains après l'étape de touraillage peut alors être assurée par l'ouverture de l'orifice de vidange OVG. L'orifice de vidange OVG peut être muni d'une trappe diamétrale ou radiale, d'une pluralité de trappes allongées disposées dans la grille GR au-dessus du convoyeur C80, ou d'une trappe centrale proche du socle SO. L'actionnement du bras BR en rotation et le positionnement des organes de répartition des grains en position de vidange peut progressivement ramener le grain vers la ou les trappes ouvertes et ainsi vider la touraille TA2 en dégageant la grille GR. Le bras BR assure une double fonction de mélange/répartition et de vidange.

La touraille TA2 comprend en outre une pluralité de goulottes GL disposées sensiblement perpendiculairement au transporteur C80. Les goulottes GL sont parallèles les unes aux autres. Les goulottes GL sont jointives bord à bord pour couvrir l'ensemble de la surface de la chambre de ventilation CA de la touraille TA2. Les goulottes GL sont disposées sous la grille GR et débouchent au-dessus de la chaîne transporteuse CN du convoyeur C80. Une goulottes GL peut être formée dé façon monobloc en s'étendant d'un bord à l'autre de la charpente intérieure CIN avec une ouverture OVT formée dans le bas de la goulotte GL au droit du convoyeur C80 ou encore être formée en deux parties disjointes au droit du convoyeur C80.

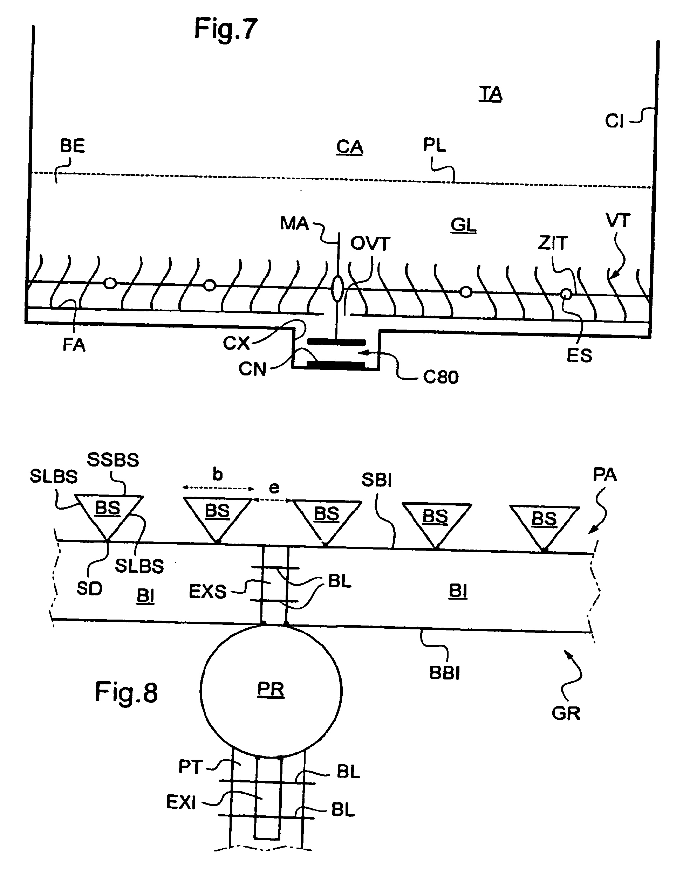

Les goulottes GL reçoivent lors de la circulation de l'air chaud et surtout lors de la vidange des grains vers le convoyeur C80, des débris, poussières et fragments des radicelles résultant du séchage des grains. L'épaisseur de la couche de radicelles peut atteindre plusieurs centimètres. Les goulottes GL peuvent être formées par une tôle en acier inoxydable d'épaisseur comprise entre 1 et 4 mm pliée en forme de Vé à fond arrondi. Les goulottes GL se raccordent à une paroi de la charpente intérieure CIN à l'opposé du convoyeur C80, par exemple par un pan fortement incliné, non représenté, pour favoriser l'évacuation des débris et radicelles. En d'autres termes, les goulottes GL, notamment illustrées figure 7 présentent en coupe transversale un fond FA sensiblement en forme d'arc de cercle et des bords d'extrémités BE sensiblement plans et inclinés vers le bord pour former une surface monotone concave. Les bords d'extrémités BE se raccordent progressivement au fond arqué FA. La pente des bords d'extrémité BE est configurée pour faciliter le glissement des débris et radicelles vers le bas, c'est-à-dire vers la vis VT. L'inclinaison des bords d'extrémité BE par rapport à la verticale peut par exemple être inférieure à 45°, préférablement à 30°. Les bords d'extrémités BE de deux goulottes voisines se raccordent selon une arête vive afin d'éviter que des débris et radicelles n'y restent. Les arêtes vives des bords d'extrémité BE des goulottes GL sont disposées dans un plan sensiblement horizontal.

Les arêtes vives sont recouvertes par un plancher PL ouvert, du genre caillebotis, permettant l'accès et le déplacement d'opérateurs, notamment de contrôle et de maintenance. Les opérateurs peuvent pénétrer dans la chambre de ventilation CA par un sas SA. Le plancher PL peut être réalisé en acier inoxydable. Le plancher PL peut se présenter sous la forme d'une grille à fort taux d'ouverture et à ouverture de dimension nettement supérieure, par exemple d'au moins dix fois, au diamètre des grains. A titre d'exemple, le plancher PL peut comprendre une pluralité de panneaux en tôle présentant des ouvertures carrées de côté compris entre 1 et 4 centimètres, séparées les unes des autres par une épaisseur de tôle comprise entre 1 et 4 mm, la hauteur de la tôle étant comprise entre 3 et 5 cm.

Les goulottes GL sont disposées horizontalement ou avec une faible inclinaison en direction du convoyeur C80. Chaque goulotte GL supporte une vis transporteuse VT, par exemple en forme d'hélice, avec une âme pleine AM, voir figure 6 ou avec une âme creuse. Le diamètre de la vis VT est en concordance avec le diamètre du fond de la goulotte GL afin d'assurer un entraînement efficace à des radicelles et débris tombés dans les goulottes GL. Le diamètre de la vis VT est compris entre 100 mm et 250 mm selon la profondeur de la goulotte correspondante. Les vis transporteuses VT sont pourvues d'éléments de support ES disposés à intervalles réguliers dans une zone d'interruption ZIT de l'hélice. Un élément de support ES peut se présenter sous la forme d'une barre sensiblement horizontale en appui contre les parois opposées de la goulotte GL. Alternativement, un élément de support ES peut être suspendu aux bords vifs supérieurs des goulottes GL ou encore en appui sur le fond arrondi des goulottes, par exemple avec une forme d'accent circonflexe.

Comme on peut le voir sur la figure 7, le convoyeur C80 est disposé dans un creux CX ménagé dans le sol de la touraille TA2. Les vis VT de part et d'autre du centre de la goulotte GL présentent un pas inversé tout en étant solidaires en rotation. La vis transporteuse VT comprend un mécanisme d'entraînement MA venant en prise avec le convoyeur C80, par exemple engrenant avec la partie supérieure de la chaîne transporteuse CN au droit d'un rouleau de support. Le mécanisme d'entraînement MA peut comprendre une roue. Le mécanisme d'entraînement MA peut comprendre une roue libre. La roue libre assure la transmission du couple dans un sens et transmet un couple nul dans l'autre sens. La chaîne transporteuse CN comprend des maillons de liaison et des racleurs espacés frottant dans le fond du creux CX formant un canal. Les racleurs peuvent munis de patins à faible frottement, par exemple en matériau synthétique. Le retour de la chaîne transporteuse CN s'effectue en partie haute du creux CX avec des rouleaux de support.

La vis transporteuse VT est entraînée dans le sens de rotation correspondant à un déplacement des radicelles et débris vers l'ouverture OVT ménagée dans la goulotte GL et ne peut pas être entraînée dans l'autre sens. Le convoyeur C80 en saillie par ses extrémités au-delà de la touraille TA2, cf figure 5, peut être muni d'un entraînement EN à deux sens de rotation. On peut ainsi, lors de la vidange du grain transporter le grain dans une direction, puis après la vidange du grain, lors du nettoyage de la touraille TA2, transporter les radicelles et débris dans la direction opposée. Les radicelles et débris peuvent ensuite être stockés dans un conteneur approprié, par exemple un silo en vue d'une valorisation éventuelle, par exemple pour la fabrication d'aliments pour les animaux ou encore par combustion en vue de produire de la chaleur, notamment utilisée pour chauffer l'air entrant dans la touraille TA2. On peut ainsi séparer de façon extrêmement simple le produit à valeur ajoutée qu'est le malt, d'une part et le sous-produit, notamment les radicelles de plus faible valeur. Le nettoyage de la touraille TA2 après la phase de touraillage peut ainsi être effectué de façon mécanisée en évitant le pelletage manuel de plusieurs tonnes de débris et radicelles après chaque touraillage. Un simple balayage de la grille GR peut suffire avant la mise en rotation des vis transporteuses VT et du convoyeur C80 dans la direction appropriée.

Dans le mode de réalisation illustré sur la figure 8, la grille GR représentée partiellement sous la forme d'une portion d'un panneau PA repose sur des poutres PR disposées sensiblement horizontalement parallèlement les unes aux autres. Les poutres PR sont supportées par les poteaux PT. Le panneau PA comprend une pluralité de barres supérieures BS et une pluralité de barres inférieures BI croisant les barres supérieures BS. Les barres supérieures BS sont fixées aux barres inférieures BI par une soudure SD pouvant se présenter sous la forme d'un point de soudure ou encore d'un cordon de soudure. Sur les figures 8 à 12, les barres supérieures et les barres inférieures d'une part, les poutres PR et les poteaux PT sont représentés à des échelles différentes, les poutres PR et les poteaux PT ayant des sections et des espacements très supérieurs à ceux des barres. La grille GR peut servir dans une touraille TA1, TA2, dans un germoir G1 à G5, et/ou dans un outil de trempage T1 à T10.

Les barres supérieures BS sont disposées dans un plan sensiblement horizontal parallèlement les unes aux autres. Les barres supérieures BS présentent, ici, une section transversale en forme de triangle isocèle, par exemple équilatéral. Le sommet du triangle est dirigé vers le bas, c'est-à-dire vers les barres inférieures BI. Chaque barre supérieure BS comprend une surface supérieure SSBS correspondant à la base du triangle et deux surfaces latérales SLBS inférieures se rejoignant en direction de la barre inférieure BI. La longueur b de la base du triangle est choisie notamment en fonction de l'espacement e entre deux barres supérieures BS adjacentes de telle sorte que le taux d'ouverture τ d'une grille GR soit supérieur à 30 % préférablement à 40 %. Le taux d'ouverture τ peut s'exprimer par τ = *e* / (*e* + b). Dans le mode de réalisation illustré sur la figure 8, le taux d'ouverture τ est d'environ 33 %. On peut choisir *b* entre 2 et 2,5 mm, *e* entre 1,5 et 2,5 mm et le hauteur des barres supérieures BS entre 3 et 4 mm.

Les barres inférieures BI reposent sur des poutres PR comprenant un profilé tubulaire, une extension supérieure EXS et une extension inférieure EXI. Les extensions supérieure EXS et inférieure EXI sont diamétralement opposées et alignées le long du profilé tubulaire. Les extensions supérieure EXS et inférieure EXI sont soudées au profilé tubulaire. Les extensions supérieure EXS et inférieure EXI sont symétriques et formées par une lame pleine ou un profilé creux de section rectangulaire. L'extension supérieure EXS est fixée, par exemple par boulon BL, à deux barres inférieures BI alignées et disposées d'un côté et de l'autre de l'extension supérieure EXS. La surface supérieure de l'extension supérieure EXS affleure la surface supérieure des barres inférieures BI. L'extension inférieure EXI est fixée, par exemple par boulon BL, à un poteau PT présentant une extrémité supérieure fendue, de forme complémentaire.

Afin de faciliter le passage de l'air et réduire les pertes de charge aérauliques et par conséquent la consommation d'énergie des ventilateurs, il est intéressant de prévoir un taux d'ouverture élevé. La distance e entre deux barres supérieures BS adjacentes est également choisie en fonction de la taille des grains de céréales afin de retenir les grains tout en laissant passer l'air de bas en haut et les débris, poussières et radicelles de haut en bas. On peut choisir une distance e comprise entre 1 et 3 mm. La forme en triangle à sommet en bas des barres supérieures BS réduit le phénomène de coincement des débris et radicelles. En effet, soit le débris présente une dimension supérieure à la distance e et reste sur la grille GR, soit le débris présente une dimension inférieure à la distance e et peut alors passer entre les barres supérieures BS de la grille GR. Le débris une fois passé la zone de distance minimale entre deux barres supérieures, sensiblement dans le plan de leur surface supérieure est alors quasiment assuré de pouvoir continuer sa course vers le bas sous l'effet de la gravité dans la mesure où ledit espace entre deux barres supérieures BS va croissant vers le bas. L'angle par rapport à la verticale des surfaces inférieures des barres supérieures BS est, ici, de l'ordre de 35° à 40 °.

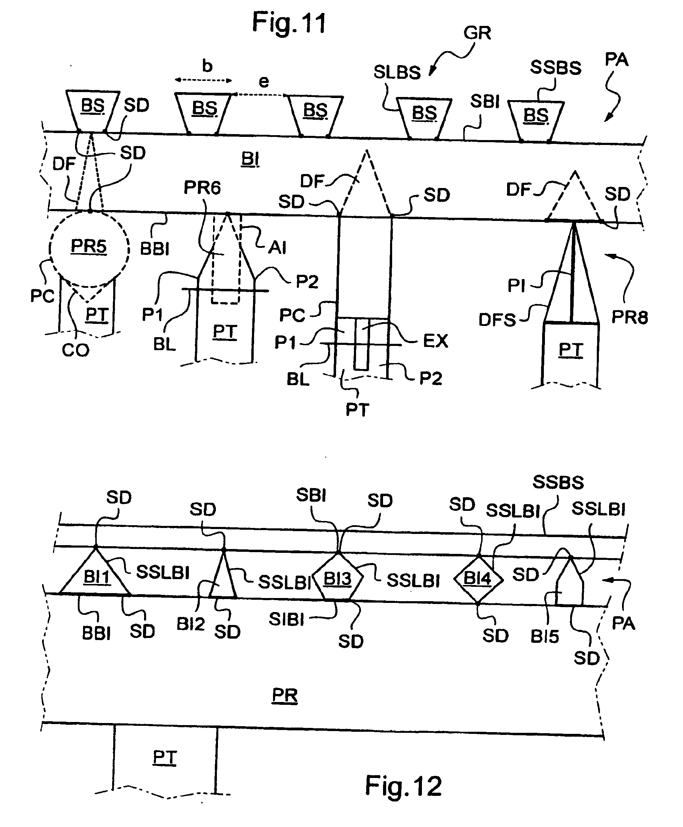

Les barres inférieures BI sont disposées perpendiculairement aux barres supérieures BS et parallèlement les unes aux autres. Les barres inférieures BI sont disposées sensiblement perpendiculairement aux poutres PR. Les barres inférieures BI peuvent reposer sur les poutres PR par simple appui de leurs bases BBI ou surfaces inférieures, y être fixées de façon amovible, par exemple par des vis ou encore soudées. Les barres inférieures BI peuvent présenter une section triangulaire, losangée, pentagonale ou autre. Différentes sections sont exposées sur la figure 12. La figure 12 est une coupe transversale prise dans un plan perpendiculaire au plan de coupe de la figure 8. De façon générale, il est préférable que les barres inférieures BI présentent un écartement entre elles supérieur à l'écartement e entre deux barres supérieures BS. On réduit ainsi le risque de colmatage de la grille. Préférablement, on peut prévoir une distance entre deux barres inférieures supérieure d'au moins 20 % à la distance e entre deux barres supérieures. La hauteur des barres inférieures BI peut être supérieure à la hauteur des barres supérieures BS, par exemple d'au moins 50 %, voire 80 %.

Il est également préférable que les barres inférieures BI offrent des surfaces d'écoulement des grains, c'est-à-dire des surfaces supérieures évitant de retenir du grain. A cet effet, on peut prévoir que les surfaces supérieures latérales SSLBI des barres inférieures BI présentent une inclinaison par rapport à la verticale inférieure ou égale à 45°, préférablement inférieure ou égale à 30°. A la jonction des surfaces supérieures latérales SSLBI, la barre inférieure BI comprend un sommet SBI, à angle vif ou à faible rayon de courbure.

Sur la figure 12, la barre inférieure BI1 présente une section en forme de triangle isocèle avec une base reposant à intervalles réguliers sur les poutres PR et un sommet SBI en contact à intervalles réguliers avec les barres supérieures BS. La barre BI1 présente un rapport hauteur sur base supérieur à 60 % et un angle d'inclinaison par rapport à la verticale de l'ordre de 35° à 40°. La barre BI1 est soudée aux poutres PR et aux barres supérieures BS. La barre BI2 présente une section en forme de triangle isocèle analogue à la barre BI1 mais à base plus étroite avec un rapport hauteur sur base de l'ordre de 200 % soit un angle des surfaces latérales supérieures SSLBI de l'ordre de 10° à 15° par rapport à la verticale.

La barre inférieure BI3 se présente, en section transversale, sous la forme d'un pentagone non régulier, symétrique par rapport à un plan vertical. La barre inférieure BI3 comprend une base BBI fixée à la poutre PR, deux surfaces latérales inférieures et deux surfaces latérales supérieures SSLBI se rejoignant pour former un sommet en contact avec les barres supérieures BS. L'angle d'inclinaison des surfaces latérales supérieures SSLBI peut être de l'ordre de 40 à 45°. L'angle d'inclinaison des surfaces inférieures présente une moindre importance pour l'écoulement du grain et peut être optimisé en vue de la résistance mécanique de la barre inférieure BI3.

La barre inférieure BI4 présente, en section transversale, la forme d'un losange carré avec un sommet inférieur en contact avec les poutres PR et un sommet supérieur en contact avec les barres supérieures BS. L'inclinaison des surfaces latérales inférieures et supérieures SSLBI par rapport à la verticale est de 45° environ. A titre de variante, on pourrait prévoir un losange présentant une hauteur supérieure lui conférant un angle d'inclinaison des surfaces latérales supérieures de l'ordre de 30° par rapport à la verticale.

La barre inférieure BI5 présente une section pentagonale symétrique par rapport à un plan vertical avec une base BBI sensiblement horizontale en contact avec les poutres PR, deux surfaces latérales sensiblement verticales et deux surfaces latérales supérieures SSLBI présentant un angle d'inclinaison par rapport à la verticale de l'ordre de 25 à 35°. Les surfaces latérales sensiblement verticales facilitent le positionnement des barres inférieures BI5 lors de la fabrication des plateaux ajourés.

Sur la figure 12, les croisements entre les barres inférieures et les barres supérieures et entre les barres inférieures et les poutres a été représenté comme munis de soudures. Toutefois, il est possible d'omettre une partie des soudures, notamment en les répartissant régulièrement. On peut ainsi prévoir de souder une jonction sur deux entre les barres supérieures et les barres inférieures. Il en va de même des jonctions entre les barres inférieures et les poutres et ce, d'autant plus, que les barres inférieures présentent une stabilité de par leur géométrie avec une surface plane en contact avec la surface supérieure des poutres PR, voir notamment les barres inférieures BI1, BI2, BI3 et BI5.

Les barres supérieures BS peuvent être pleines ou creuses selon leur forme et le coût des matériaux utilisés. Il en va de même des barres inférieures BI qui peuvent notamment être pleines dans le cas de la barre BI2 présentant une section triangulaire relativement pointue.

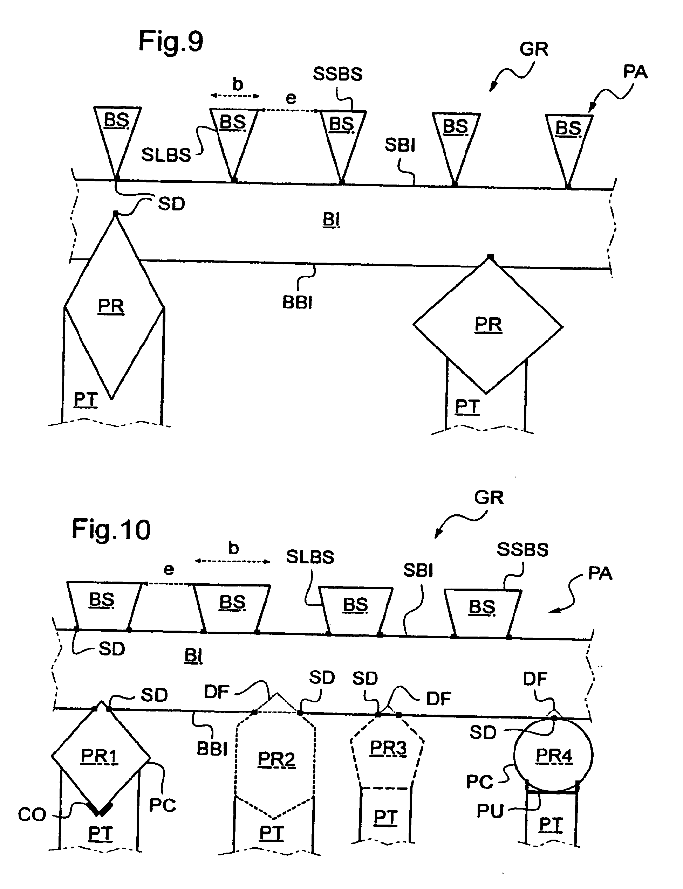

Dans le mode de réalisation illustré sur la figure 9, les barres supérieures BS présentent une forme similaire à celle de la figure 8 avec toutefois une inclinaison des surfaces latérales SLBS par rapport à la verticale comprise entre 15° et 20°. Le taux d'ouverture est, ici, élevé, de l'ordre de 54% à 58 %. Les poutres PR présentent une forme de losange carré ou allongé verticalement avec un sommet fixé aux barres inférieures par une soudure SD et en saillie dans lesdites barres inférieures.

Dans le mode de réalisation illustré sur la figure 10, les barres supérieures BS présentent une forme de pentagone symétrique par rapport à un plan vertical avec une base reposant sur les barres inférieures BI, deux surfaces latérales SLBS inférieures inclinées d'environ 15° à 20° par rapport à la verticale. Le taux d'ouverture est, ici, de l'ordre de 35% à 45%, par exemple égal à 40%.

Dans la partie basse de la figure 10, sont illustrés quatre modes de réalisation distincts des poutres PR, étant entendu qu'un panneau donné comporte ou est associé avec des poutres d'un seul mode de réalisation en règle générale. La poutre PR1 se présente en coupe transversale sous une forme générale de losange allongé à sommet bas renforcé. Plus particulièrement, la poutre PR1 peut comprendre un profilé creux PC dont la hauteur est supérieure d'au moins 20 % à la largeur. Le profilé creux PC est renforcé à son sommet inférieur par une cornière CO, par exemple fixée par soudure. L'angle d'inclinaison par rapport à la verticale des surfaces latérales supérieures de la poutre PR1 peut être de l'ordre de 35° à 40°.

La poutre PR2, représentée en pointillés, présente une section hexagonale symétrique par rapport à un plan vertical avec troncature plate au sommet supérieur. La poutre PR2 comprend un déflecteur DF fixé sur la troncature plate entre les barres inférieures. Les déflecteurs DF évitent la rétention de grains. Les déflecteurs DF peuvent être réalisés en tôle inox de faible épaisseur. La poutre PR2 présente deux surfaces latérales sensiblement verticales de dimension supérieure à celle des autres surfaces, latérales inférieures et latérales supérieures. L'inclinaison des surfaces latérales supérieures par rapport à la verticale peut être de l'ordre de 55° à 60°.

La poutre PR3, représentée en tirets, possède une section transversale pentagonale symétrique par rapport à un plan vertical avec une base inférieure et un sommet supérieur avec troncature plate en contact avec les barres inférieures BI. Les surfaces latérales supérieures forment un angle par rapport à un plan vertical compris entre 35° et 45°, par exemple égal à 45°. Les déflecteurs DF peuvent présenter le même angle. Les surfaces latérales inférieures peuvent présenter un angle de l'ordre de 10° à 15° par rapport à un plan vertical.

La poutre PR4 se présente sous la forme d'un profilé tubulaire creux PC en contact avec la barre inférieure BI. Les déflecteurs DF offrent des surfaces supérieures latérales inclinées d'environ 45° pour l'écoulement des débris et radicelles, sensiblement tangents avec le profilé PC sur lequel lesdits déflecteurs DF sont fixés. Le profilé PC est renforcé à son extrémité inférieure par un profilé PU à section transversale en U à fond sensiblement horizontal et courtes branches verticales soudées sur le profilé PC. Ce mode de réalisation offre un raccordement aisé de la surface inférieure de la poutre PR formée par le fond sensiblement plan du profilé PU au poteau PT.

Dans le mode de réalisation illustré sur la figure 11, les barres supérieures BS présentent une section transversale en forme de trapèze à petite base en contact avec les barres inférieures BI. Le taux d'ouverture est de l'ordre de 45 à 55%. En d'autres termes, l'espacement *e* entre deux barres supérieures BS est sensiblement égal à la longueur *b* de la grande base du trapèze formant la surface supérieure SSBS de la barre supérieure BS. Les surfaces latérales inclinées vers le bas des barres supérieures BS présentent un angle par rapport à la verticale compris entre 10° et 25°, par exemple égal à 18°. Les barres supérieures BS sont fixées par deux soudures SD à la barre inférieure BI, une à chaque extrémité de la petite base. Toutefois, une forte proportion, par exemple 50%, de ces soudures peut être omise.

Quatre modes de réalisations de poutres sont représentés sur la figure 11. La poutre PR5 se présente sous la forme d'un profilé PC de forme tubulaire renforcé à son extrémité inférieures par une cornière CO dont les ailes sont sensiblement plus longues que les ailes de la cornière de la poutre PR1. La longueur de l'aile de la cornière CO de la poutre PR5 peut être supérieure au demi rayon du profilé PC, voire à 75% du rayon du profilé PC. Des déflecteurs DF fortement pentés sont fixés sur le profilé PC entre les barres inférieures BI. L'angle peut être de l'ordre de 3 à 10°. Le sommet des déflecteurs DFpeut affleurer la surface supérieure des barres inférieures BI.

La poutre PR6 se présente sous la forme d'un profilé creux à section transversale pentagonale symétrique par rapport à un plan sensiblement vertical et présentant une base, deux surfaces latérales sensiblement verticales et deux surfaces latérales supérieures se rejoignant en un sommet en contact avec les barres inférieures BI. Les surfaces latérales supérieures présentent un angle compris entre 25° et 45° par rapport à un plan vertical, par exemple de l'ordre de 30° offrant ainsi un excellent écoulement vers le bas des débris et autres radicelles. Une aile triangulaire AI est soudée, d'une part sur chaque surface latérale supérieure et d'autre part avec la surface inférieure des barres inférieures BI, de chaque côté su sommet. Un bord de l'aile AI est dans le prolongement d'une surface latérale sensiblement verticale. Les ailes AI sont disposées selon des plans sensiblement perpendiculaires à l'axe général de la poutre PR6. La partie inférieure de la poutre PR6 est serrée entre deux portions P1 et P2 du poteau PT, par exemple par un boulon BL. Les portions P1 et P2 forment une rainure assurant le positionnement de la poutre PR6 au montage.

La poutre PR7 comprend d'un profilé creux PC à section transversale rectangulaire avec deux petits côtés sensiblement horizontaux et deux grands côtés sensiblement verticaux, et des déflecteurs DF soudés sur le petit côté supérieur du profilé creux PC entre les barres inférieures BI. La poutre PR7 est symétrique par rapport à un plan sensiblement vertical. Les déflecteurs DF présentent deux surfaces latérales se rejoignant en un sommet. Les surfaces latérales présentent un angle compris entre 15° et 30° par rapport à un plan vertical, par exemple de l'ordre de 25°. La poutre PR7 comprend une extension inférieure EX fixée à la surface inférieure du profilé PC. L'extension inférieure EX peut se présenter sous la forme d'un profilé creux de largeur comprise entre 15 et 45% de la largeur du profilé PC. Alternativement, l'extension inférieure EX peut se présenter sous la forme d'une lame pleine de largeur comprise entre 5 et 20% de la largeur du profilé PC. L'extension inférieure EX est serrée entre deux portions P1 et P2 du poteau PT, par exemple par un boulon BL. Les portions P1 et P2 forment une rainure assurant le positionnement de la poutre PR6 au montage.

La poutre PR8 comprend d'un profilé PI à section transversale en I avec deux petits côtés sensiblement horizontaux et une âme sensiblement verticale, et des déflecteurs DF soudés sur le petit côté supérieur du profilé PI entre les barres inférieures. Le profilé PI peut être obtenu par soudage de plaques ou venu monobloc de fabrication. La poutre PR8 est symétrique par rapport à un plan sensiblement vertical. Les déflecteurs DF présentent deux surfaces latérales supérieures se rejoignant en un sommet. Les surfaces latérales supérieures présentent un angle compris entre 20° et 40° par rapport à un plan vertical, par exemple de l'ordre de 30°. En outre, la poutre PR8 peut comprendre deux déflecteurs supplémentaires DFS inclinés pour éviter l'accumulation de débris sur le petit côté inférieur du profilé PI, de part et d'autre de l'âme. Les déflecteurs supplémentaires DFS peuvent être soudés sur l'âme par leur bord supérieur et sur l'extrémité libre du petit côté inférieur du profilé PI par leur bord inférieur. L'inclinaison des déflecteurs DF par rapport à la verticale peut être comprise entre 10 et 30°, par exemple 15°. Les déflecteurs DF peuvent être réalisés en tôle mince, par exemple d'épaisseur comprise entre 0,5 et 2 mm. Alternativement, les déflecteurs supplémentaires DFS peuvent participer de façon significative aux performances mécaniques de la poutre PR8, notamment en flexion, avec une épaisseur voisine de celle de l'âme ou de celle des petits côtés.

Les barres supérieures peuvent présenter une section transversale sensiblement trapézoïdale ou triangulaire. Les surfaces latérales des barres supérieures peuvent présenter une inclinaison par rapport à la verticale comprise entre 10° et 50°. Les surfaces latérales supérieures des barres inférieures peuvent présenter une inclinaison par rapport à la verticale comprise entre 5° et 45°. Les poutres peuvent être tubulaires, à section losangée, à section rectangulaire ou à section en I. Le dispositif peut comprendre des déflecteurs montés le long des poutres. Un germoir peut comprendre un tel dispositif monté au-dessus d'organes de vidange. Un outil de trempage peut comprendre un tel dispositif monté entre un fond de cuve et un organe d'amenée de grain.

L'invention ne se limite pas aux exemples de procédé et installations ou éléments d'installation décrits ci-avant, seulement à titre d'exemple, mais elle englobe toutes les variantes que pourra envisager l'homme de l'art dans le cadre des revendications ci-après.

## Revendications

1. Dispositif de grille (GR) de touraillage de grains germés pour fond de cuve (CV) à grains germés, **caractérisé en ce qu'**il comprend des barres supérieures (BS) parallèles présentant au moins une surface supérieure (SSBS) sensiblement horizontale, et deux surfaces latérales (SLBS) symétriques et inclinées par rapport à un plan longitudinal, lesdites surfaces latérales se rapprochant mutuellement en allant à l'opposé de la surface supérieure, des barres inférieures (BI) sensiblement perpendiculaires aux barres supérieures (BS), présentant deux surfaces latérales (SSLBI) symétriques et inclinées par rapport à un plan vertical, lesdites surfaces latérales (SSLBI) se rapprochant mutuellement en allant vers les barres supérieures (BS), et des poutres (PR) de support des barres inférieures (BI), les barres inférieures (BI) étant fixées aux barres supérieures (BS) et aux poutres de support (PR), l'écartement minimal entre deux barres inférieures (BI) étant supérieur à l'écartement minimal entre deux barres supérieures (BS).

2. Dispositif selon la revendication 1, dans lequel les barres supérieures (BS) présentent une section transversale sensiblement trapézoïdale ou triangulaire.

3. Dispositif selon l'une des revendications précédentes, dans lequel les barres inférieures (BI) présentent une section transversale sensiblement pentagonale, losangée ou triangulaire

4. Dispositif selon l'une des revendications précédentes, dans lequel les surfaces latérales (SLBS) des barres supérieures présentent une inclinaison par rapport à la verticale comprise entre 10° et 50°.

5. Dispositif selon l'une des revendications précédentes, dans lequel les surfaces latérales supérieures des barres inférieures présentent une inclinaison par rapport à la verticale comprise entre 5° et 45°.

6. Dispositif selon l'une des revendications précédentes, dans lequel les poutres (PR) sont tubulaires, à section losangée, à section rectangulaire ou à section en I.

7. Dispositif selon l'une des revendications précédentes, comprenant des déflecteurs (DF) montés sur les poutres entre les barres inférieures (BI).

8. Dispositif selon l'une des revendications précédentes, comprenant des déflecteurs (DFS) montés le long des poutres.

9. Dispositif selon l'une des revendications précédentes, dans lequel la grille (GR) présente un taux d'ouverture supérieur à 30%, préférablement 40%.

10. Touraille comprenant un dispositif selon l'une des revendications précédentes, et des goulottes (GL) réalisées en tôle d'acier galvanisé, situées sous le dispositif, et des vis (VT) réalisées en tôle d'acier galvanisé, les vis étant disposées dans les goulottes.

11. Germoir comprenant un dispositif selon l'une des revendications 1 à 9, monté au dessus d'organes de vidange.

12. Outil de trempage comprenant un dispositif selon l'une des revendications 1 à 9, monté entre un fond de cuve et un organe d'amenée de grains.

## Claims

1. A sprouted grains kilning gate device (GR) for a sprouted grains tank bottom, **characterised in that** it comprises parallel upper bars (BS) having at least one upper surface (SSBS) that is substantially horizontal and two symmetrical side surfaces (SLBS) that are inclined in relation to a longitudinal plane, with the said side surfaces converging mutually from the upper surface, lower bars (BI) that are substantially perpendicular to the upper bars (BS), having two lateral surfaces (SSLBI) that are symmetrical and inclined in relation to the vertical plane, the said lateral surfaces (SSLBI) converging mutually in the direction of the upper bars (BS), and supporting beams (PR) for the lower bars (BI), whereby the lower bars (BI) are fixed to the upper bars (BS) and to the supporting beams (PR), with the minimum spacing between two lower bars (BI) being greater than the minimum spacing between two upper bars (BS)

2. Device according to Claim 1, in which the upper bars (BS) have a transverse cross-section that is essentially trapezoidal or triangular in shape.

3. Device according to either of the preceding claims, in which the lower bars (BI) have a cross-section that is essentially pentagonal, diamond-shaped or triangular in shape.

4. Device according to any of the preceding claims, in which the side surfaces (SLBS) of the upper bars are at an angle of between 10° and 50° in relation to the vertical.

5. Device according to any of the preceding claims, in which the upper side surfaces of the lower bars are at an angle of between 5° and 45° in relation to the vertical.

6. Device according to any of the preceding claims, in which the beams (PR) are tubular, with a diamond-shaped cross-section, a rectangular cross-section or an I-shaped cross-section.

7. Device according to any of the preceding claims, comprising deflectors (DF) mounted on the beams between the lower bars (BI).

8. Device according to any of the preceding claims, comprising deflectors (DFS) mounted along the beams.

9. Device according to any of the preceding claims, in which the gate (GR) has an opening rate in excess of 30%, preferably 40%.

10. Kiln comprising a device according to any of the preceding claims and also chutes (GL) in galvanised sheet metal, situated below the device, and screws (VT), in galvanised sheet metal, the screws being arranged in the chutes.

11. Malthouse comprising a device according to any of the preceding claims 1 to 9, mounted above discharge fittings.

12. Dipping tool comprising a device according to any of the preceding claims 1 to 9, mounted between the tank bottom and the system for feeding the grains.

## Patentansprüche

1. Rostanordnung (GR) für den Boden eines Bottichs (CV) für gekeimtes Korn, **dadurch gekennzeichnet dass** sie umfasst: - parallele obere Stangen (BS), die mindesten eine im Wesentlichen horizontale obere Fläche (SSBS) darbieten, - und zwei symmetrische und zu einer Längsebene geneigte Seitenflächen (SLBS), wobei die Seitenflächen sich von der oberen Fläche wegverlaufend einander annähern, - untere Stangen (BI), die im wesentlichen rechtwinklig zu den oberen Stangen (BS) verlaufen, - zwei seitliche Flächen (SSLBI), die symmetrisch und relativ zu einer vertikalen Ebene geneigt sind, wobei die seitlichen Flächen (SSLBI) sich zu den oberen Stangen (BS) hin einander annähern, - und Stützträger (PR) für die unteren Stangen (BI), wobei die unteren Stangen (BI) an den oberen Stangen (BS) und an den Stützträgern (PR) festgelegt sind, und wobei der Mindestabstand zwischen zwei unteren Stangen (BI) größer ist als der Mindestabstand zwischen zwei oberen Stangen (BS).

2. Rostanordnung nach Anspruch 1, bei der die oberen Stangen (BS) einen im Wesentlichen trapez- oder dreieckförmigen Querschnitt aufweisen.

3. Rostanordnung nach einem der vorhergehenden Ansprüche, bei der die unteren Stangen (BI) einen im wesentlichen fünfeckigen, rautenförmigen oder dreieckigen Querschnitt aufweisen.

4. Rostanordnung nach einem der vorhergehenden Ansprüche, bei der die Seitenflächen (SLBS) der oberen Stangen eine Neigung zwischen 10° und 50° relativ zur Vertikalen aufweisen.

5. Rostanordnung nach einem der vorhergehenden Ansprüche, bei der die oberen Seitenflächen der unteren Stangen eine Neigung zwischen 5° und 45° relativ zur Vertikalen aufweisen.

6. Rostanordnung nach einem der vorhergehenden Ansprüche, bei der die Träger (PR) im Querschnitt rohrförmig, rautenförmig, rechteckig oder I-förmig sind.

7. Rostanordnung nach einem der vorhergehenden Ansprüche mit Ablenkelementen (DF), die auf den Trägern zwischen den unteren Stangen (BI) angeordnet sind.

8. Rostanordnung nach einem der vorhergehenden Ansprüche, mit Ablenkelementen (DFS), die längs der Träger angeordnet sind.

9. Rostanordnung nach einem der vorhergehenden Ansprüche, bei der der Rost (GR) einen Offenanteil von mehr als 30 % - bevorzugt 40 % - aufweist.

10. Darre mit einer Rostanordnung nach einem der vorhergehenden Ansprüche und Wannen (GL) aus verzinktem Stahlblech, die unter der Rostanordnung angeordnet sind, sowie Schnecken (VT) aus verzinktem Stahlblech, die in den Wannen angeordnet sind.

11. Keimvorrichtung mit einer Rostanordnung nach einem der Ansprüche 1 bis 9, die über Entleerungseinrichtungen angeordnet ist.

12. Einweichvorrichtung mit einer Rostanordnung nach einem der Ansprüche 1 bis 9, wobei die Einweicheinrichtung zwischen einem Bottichboden und einem Korn-Zuführungsorgan angeordnet ist.
